# EUROPEAN PATENT SPECIFICATION

(11) **EP 3 342 648 B1**
(45) Date of publication and mention of the grant of the patent: **19.02.2020**
(21) Application number: 16207446.2
(22) Date of filing: 30.12.2016
(51) Int. Cl.: B60R 19/00

(54) **IMPACT ENERGY ABSORBER MEMBER FOR A VEHICLE**
AUFPRALLENERGIEDÄMPFERELEMENT FÜR EIN FAHRZEUG
ÉLÉMENT ABSORBEUR D'ÉNERGIE D'IMPACT POUR UN VÉHICULE

(43) Date of publication of application: 04.07.2018
(73) Proprietor: Ford Otomotiv Sanayi Anonim Sirketi, 34885 Sancaktepe/Istanbul (TR)
(72) Inventor: Uçanlar, Mahmut Erdem, Izmit/Kocaeli (TR); Aksu, Atilla, Göztepe/Kadiköy Istanbul (TR); Kara, Tugrul, Besiktas/ISTANBUL (TR); Sertkaya, Samet, Çekmeköy / Istanbul (TR); Uslu, Ilke Kayin Uslu, Kartal/Istanbul (TR)
(74) Representative: Illing, Rolf

(56) References cited:
- EP-A2- 1 352 810
- DE-A1-102009 031 746
- FR-A1- 2 927 033

## Description

The invention relates to a front module for a vehicle and a vehicle with such a front module.

Vehicles need to have air guiding parts behind the grilles of the front bumper of the vehicle for better engine cooling and aerodynamic performance. Although vehicles need pedestrian protection lower leg impact energy absorber in front of bumper beam which is also behind the front fascia & grilles. Cost and assembly issues emerged because of current design while maintaining pedestrian protection and low speed damageability safety targets.

FR 2 965 226 A1 discloses a device with an upper reinforcement, a lower reinforcement and two jambs connecting the upper reinforcement and the lower reinforcement so as to define a frame. The upper reinforcement and the lower reinforcement are provided with shock absorbers, where one of the shock absorbers is laid at ends of the upper reinforcement. Another shock absorber extends through the lower reinforcement. Deflectors are arranged partly around the frame.

DE 10 2008 004 311 A1 discloses a device with an air guiding element mechanically adjusted between a rest position and an operating position around a horizontal vehicle transverse axis. The element is adjusted by a dynamic pressure flap depending on the dynamic pressure acting at the flap. The flap is rotatable supported around a horizontal rotation axis. The flap is partially integrated in a lower body region of a bumper unit and/or a body-sided cover, and in between the bumper unit and an engine compartment cover, where the cover is arranged below the bumper unit.

JPS 6231546 A discloses an air-spoiler which is fixed to the lower wall of a bumper fascia, and which is incorporated at its upper rear end integrally with an air guide projected rearward and made to be flush with the lower surface entering into the outside air introduction port is rectified by the air guide so that air flows toward a radiator being stably guided.

FR 2 927 033 A1 discloses an energy absorbing beam for front bumper of motor vehicle, has cross-piece including holes extending longitudinally along direction of absorbers and forming air inlet grill of front bumper, where absorbers are arranged at ends of cross-piece. The beam has absorbers arranged at ends of a cross-piece and extending substantially perpendicular to the cross-piece. The cross-piece includes through holes extending longitudinally along a direction of the absorbers, and forms an air inlet grill of a front bumper. Bumper skin of the bumper is arranged between a shock absorption band and the beam, where the holes of the cross-piece, holes of the band and holes of another air inlet grill form a global air inlet grill presenting a surface.

EP 1 352 810 A2 discloses a structure of a front portion of a vehicle body with an air duct. A portion between a front end of an air guide plates, which forms an air duct portion, and the front exterior member of the vehicle is sealed by a seal portion. Therefore, hot air leaking from inside of an engine room, is positively prevented from being drawn into the air duct portion after it flows around the front end of the air guide plate.

It is therefore an object of the invention to reduce assembly process timing, costs, and weight and to improve the protection of lower a lower leg of a pedestrian.

A front module for a vehicle according to the invention comprises at least an impact energy absorber member, a front bumper, and a bolster frame, characterised by a lower leg stiftener, wherein the lower leg stiffener is configured to stiffen the pedestrian protection in order to protect a lower leg of a pedestrian, comprises integrated air guiding means for guiding air from the front bumper member of the vehicle to a radiator of the vehicle, wherein the integrated air guiding means comprises at least one vertical flap, wherein the flap is reinforced by a rib, wherein the rib is fixed to the front bumper and the radiator in the direction of streaming air flow. In other words, a cooling air flow passed first the front bumper, then the impact energy absorber, and then the radiator. Thus, by the integrated guiding means air flow will be provided in one piece part instead of three different parts. Therefore, assembly and cost advantages will be gained. The at least one vertical flap ensure air flow and therefore effective cooling. Since the rib is fixed to the front bumper member and/or to the bolster frame the rib is part of the front bumper and/or of bolster frame. They are brought into contact during assembly of the front module. The rib can be an integrally part of the front bumper member and/or the bolster frame, for example, if the front bumper member and/or bolster frame is plastic or metal injection moulded.

In a preferred embodiment the impact energy absorber member comprises a snap fit for fixing to the front bumper member. This allows an easy assembly of the front module without using additional fixing means like screws, bolts, or the like.

In a preferred embodiment the bolster frame is arranged between the impact energy absorber member and the radiator. Accordingly, the impact energy absorber member is arranged between the front bumper and the radiator in the direction of streaming air flow. In other words, a cooling air flow passed first the front bumper, then the impact energy absorber, and then the radiator. Thus, by the integrated guiding means air flow will be provided in one piece part instead of three different parts. Therefore, assembly and cost advantages will be gained. The at least one vertical flap ensure air flow and therefore effective cooling. Since the rib is fixed to the front bumper member and/or to the bolster frame the rib is part of the front bumper and/or of bolster frame. They are brought into contact during assembly of the front module. The rib can be an integrally part of the front bumper member and/or the bolster frame, for example, if the front bumper member and/or bolster frame is plastic or metal injection moulded.

In a preferred embodiment the impact energy absorber member comprises a snap fit for fixing to the front bumper member. This allows an easy assembly of the front module without using additional fixing means like screws, bolts, or the like.

In a preferred embodiment the bolster frame is arranged between the impact energy absorber member and the radiator. Accordingly, the bolster is arranged between the front bumper and the radiator in the direction of streaming air flow. In other words, a cooling air flow passed first the front bumper, then the bumper, and then the radiator.

Further, the invention relates to a vehicle with such a front module.

An example of the invention will now be described with reference to the following drawing:
- Fig. 1: shows a front module of a vehicle.
- Fig. 2: shows an explosion view of a front module shown in Fig. 1.
- Fig. 3: shows assembled part of front module shown in Fig. 2.
- Fig. 4: shows details of the front module shown in Fig. 1.

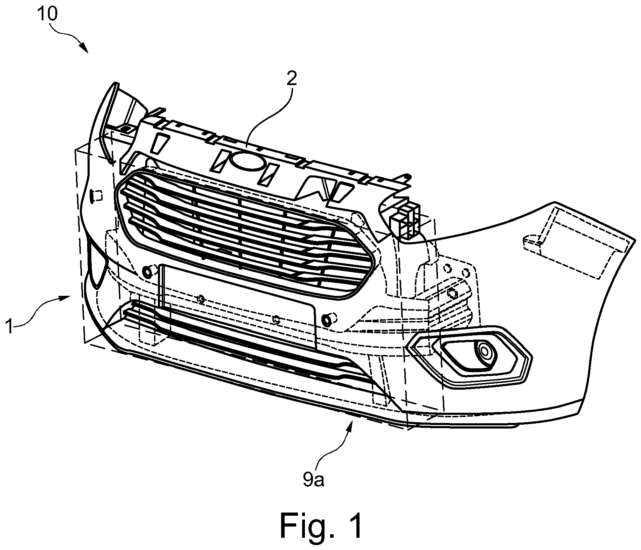

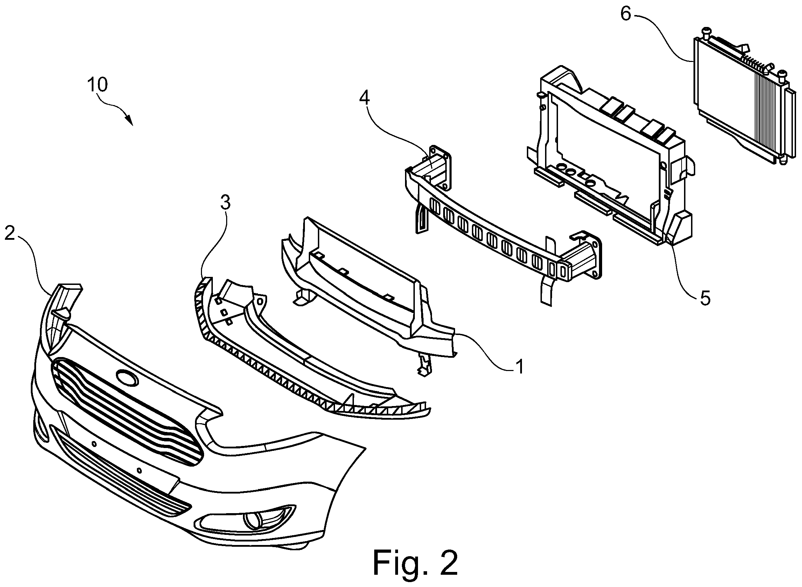

Reference is made to Fig. 1 and 2. The front module 10 for a vehicle comprises an impact energy absorber member 1, a front bumper 2, a lower leg stiffener 3, a front bumper beam 4, a bolster frame 5, and a radiator 6.

As shown in Fig. 2, in the direction of air flow the first place will be the front bumper 2, followed by the lower leg stiffener 3, the impact energy absorber 1, the front bumper beam 4, the bolster frame 5, and the radiator 6.

The impact energy absorber member 1 is configured to route air coming from the front bumper 2 to the radiator 6 which is part of an engine cooling system of the vehicle.

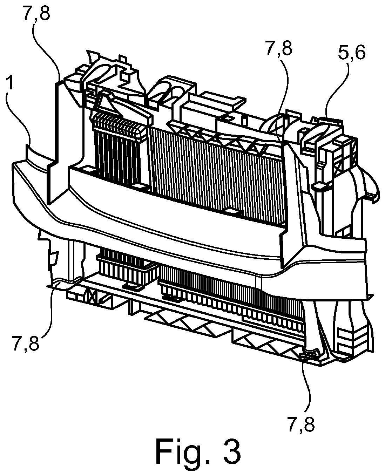

Therefore, as shown in Fig.3, the impact energy absorber member 1 comprises air guiding means 7 configured to ensure air flow and therefore effective cooling. In present example the air guide means 7 are four flaps 8 which are vertically orientated. The four flaps 8, and therefore the air guiding means, are integrated parts of the impact energy absorber member 1. Moreover, the impact energy absorber member 1 comprises a snap fit for fixing to the front bumper 2.

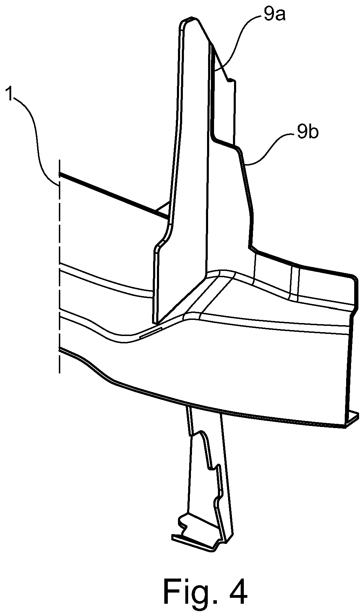

As shown in Fig. 4, the front bumper 2 comprises a rib 9a which, when assembled, stays in contact with the flap 8 to reinforce the flap 8. Also, in the same manner, the bolster frame 5 comprises a rib 9b which, when assembled, stays in contact with the flap 8 to reinforce the flap 8.

The lower leg stiffener 3 is configured to stiffen the pedestrian protection. The front bumper beam 4 comprises crash-cans. The bolster frame 5 is configured to reinforce the front bumper 2 and the radiator 6.

The front module 10 and its parts, e.g. the impact energy absorber member 1 with the air guiding means 7, e.g. the flaps 8, the front bumper 2 with the rib 9a, the lover leg stiffener 3, the front bumper beam 4, the bolster frame 5 with the rib 9b can fabricated by plastic or metal injection moulded and therefore configured as integrally parts, respectively.

Thus, this will lead to reduced assembly process timing, costs, and weight.

### Reference signs

- 1: impact energy absorber member
- 2: front bumper
- 3: lower leg stiffener
- 4: front bumper beam
- 5: bolster frame
- 6: radiator
- 7: air guiding means
- 8: flap
- 9a: rib
- 9b: rib
- 10: front module

## Claims

1. Front module (10) for a vehicle with at least an impact energy absorber member (1), a front bumper (2), a lower leg stiffener (3), and a bolster frame (5), wherein the lower leg stiffener (3) is configured to stiffen the pedestrian protection in order to protect a lower leg of a pedestrian, with integrated air guiding means (7) for guiding air from the front bumper member (2) of the vehicle to a radiator (6) of the vehicle, wherein the impact energy absorber member (1) comprises integrated air guiding means (7) with at least one vertical flap (8), wherein the flap (8) is reinforced by a rib (9a, 9b), wherein the rib (9a) is fixed to the front bumper member (2) and to the bolster frame (5) of the front module (10), wherein the flap (8), and therefore the air guiding means (7), are integrated parts of the impact energy absorber (1).

2. Front module (10) according to claim 1, wherein the impact energy absorber member (1) comprises a snap fit for fixing to the front bumper member (2).

3. Front module (10) according to claim 1 or 2, wherein the bolster frame (5) is arranged between the impact energy absorber member (1) and the radiator (6).

4. Vehicle with a front module (10) according to one of the claims 1 to 3.

## Patentansprüche

1. Frontmodul (10) für ein Fahrzeug mit mindestens einem Aufprallenergiedämpferelement (1), einem vorderen Stoßfänger (2), einem Versteifungsteil (3) für den Unterschenkel und einem Polsterungsrahmen (5), wobei das Versteifungsteil (3) für den Unterschenkel dazu konfiguriert ist, den Fußgängerschutz zu versteifen, um einen Unterschenkel eines Fußgängers zu schützen, mit integrierten Luftführungsmitteln (7) zum Führen von Luft von dem vorderen Stoßfängerelement (2) des Fahrzeugs zu einem Kühler (6) des Fahrzeugs, wobei das Aufprallenergiedämpferelement (1) integrierte Luftführungsmittel (7) mit mindestens einer vertikalen Klappe (8) umfasst, wobei die Klappe (8) durch eine Rippe (9a, 9b) verstärkt ist, wobei die Rippe (9a) an dem vorderen Stoßfängerelement (2) und an dem Polsterungsrahmen (5) des Frontmoduls (10) fixiert ist, wobei die Klappe (8) und daher die Luftführungsmittel (7) integrierte Teile des Aufprallenergiedämpfers (1) sind.

2. Frontmodul (10) nach Anspruch 1, wobei das Aufprallenergiedämpferelement (1) eine Schnappverbindung zum Fixieren an dem vorderen Stoßfängerelement (2) umfasst.

3. Frontmodul (10) nach Anspruch 1 oder 2, wobei der Polsterungsrahmen (5) zwischen dem Aufprallenergiedämpferelement (1) und dem Kühler (6) angeordnet ist.

4. Fahrzeug mit einem Frontmodul (10) nach einem der Ansprüche 1 bis 3.

## Revendications

1. Module avant (10) pour un véhicule, comprenant au moins un élément absorbeur d'énergie d'impact (1), un pare-chocs avant, un élément raidisseur pour partie inférieure de jambe (3) et un cadre de rembourrage (5), l'élément raidisseur pour partie inférieure de jambe (3) étant configuré pour rigidifier la protection des piétons afin de protéger une partie inférieure de la jambe d'un piéton, avec un moyen de guidage d'air intégré (7) pour guider l'air depuis l'élément de pare-chocs avant (2) du véhicule vers un radiateur (6) du véhicule, l'élément absorbeur d'énergie d'impact (1) comprenant un moyen de guidage d'air intégré (7) avec au moins un volet vertical (8), le volet (8) étant renforcé par une nervure (9a, 9b), la nervure (9a) étant fixée à l'élément de pare-chocs avant (2) et au cadre de rembourrage (5) du module avant (10), le volet (8), et par conséquent le moyen de guidage d'air (7), étant des parties intégrales de l'absorbeur d'énergie d'impact (1).

2. Module avant (10) selon la revendication 1, dans lequel l'élément absorbeur d'énergie d'impact (1) comprend un ajustement par encliquetage pour la fixation à l'élément de pare-chocs avant (2).

3. Module avant (10) selon la revendication 1 ou 2, dans lequel le cadre de rembourrage (5) est disposé entre l'élément absorbeur d'énergie d'impact (1) et le radiateur (6).

4. Véhicule comprenant un module avant (10) selon l'une des revendications 1 à 3.
